# EUROPEAN PATENT APPLICATION

(11) **EP 4 593 245 A1**
(43) Date of publication of application: **30.07.2025**
(21) Application number: 24307145.3
(22) Date of filing: 17.12.2024
(51) Int. Cl.: H02J 9/06, H02J 9/08

(54) **METHOD AND APPARATUS FOR CONTROLLING ENERGY STORAGE UNIT OF DUAL POWER SUPPLY TRANSFER SWITCH DEVICE**

(30) Priority: 26.01.2024 CN 202410118295
(71) Applicant: SCHNEIDER ELECTRIC INDUSTRIES SAS, 92500 Rueil-Malmaison (FR)
(72) Inventor: YING, Xiaoping, Shanghai, 201203 (CN); WU, Di, Shanghai, 201203 (CN); YIN, Jiting, Shanghai, 201203 (CN); ZHAO, Chaomin, Shanghai, 201203 (CN); BI, Baoyun, Shanghai, 201203 (CN); WU, Wei, Shanghai, 201203 (CN)
(74) Representative: Manitz Finsterwald Patent- und Rechtsanwaltspartnerschaft mbB

(57) **Abstract**

A method and an apparatus for controlling an energy storage unit of a dual power supply transfer switch device are provided. The method includes, based on power states of a primary power supply and a backup power supply, causing a power selection circuit to select a working power supply for supplying power to the energy storage unit or to a transferring unit (310), the transferring unit is capable of transferring between opening and closing, and the energy storage unit is capable of assisting a transferring process; in response to energy stored by the energy storage unit being consumed during the transferring process, causing the energy storage unit to be powered by the selected working power supply to perform energy storage (320); and in response to completion of an energy storage process, causing the energy storage unit to release the power selection circuit (330).

## Description

### FIELD

Example embodiments of the present disclosure generally relate to a field of electrical equipment and, more particularly, to a method and an apparatus for controlling an energy storage unit of a dual power supply transfer switch device, a dual power supply transfer switch device, and a computer readable storage medium.

### BACKGROUND

A dual power supply transfer switch device (or ATS device for short) is used to transfer a load from a power supply to another. ATS devices are generally classified into two types: one-chip (PC level) and dual circuit breaker (CB level). A conventional PC level ATS device generally adopts only an excitation coil to implement switching of power supplies. A conventional CB level ATS device generally integrates an energy storage motor inside each circuit breaker to assist in the switching of the power supplies.

In the CB level ATS device, whether the energy storage motor in the circuit breaker performs an energy storage process is passively determined by a primary circuit connected to the circuit breaker. When the primary circuit is powered on, the energy storage motor can store energy. However, because parameters such as a voltage and a frequency that the energy storage motor bears when storing energy cannot be selected, there is a risk of damaging the motor when these parameters exceed the nominal range of the motor.

In the PC level ATS device, an energy storage mechanism may also be adopted to assist the switching of the power supplies. For example, the energy storage mechanism and a transferring structure may reuse a same power supply circuit. However, because the energy storage mechanism cannot properly release the power supply circuit to the transferring mechanism, energy storage and transferring processes may conflict, and there is a risk that both the energy storage and transferring processes fail.

In addition, because rated power supply voltages of two power supplies may be different, and the energy storage motors also have different product models, the energy storage motors with different specifications may need to be used due to different voltages of the two power supplies in a use process. This, on the one hand, increases difficulty of production and management and control, resulting in increased design costs and production costs, and on the other hand, also brings users difficulty of selecting types. In addition, because the energy storage motor is directly connected to an alternating current end, an excessively high input voltage may cause damage to the energy storage motor, thereby affecting reliability of a product.

### SUMMARY

Embodiments of the present disclosure provide a method and an apparatus for controlling an energy storage unit of a dual power supply transfer switch device, a dual power supply transfer switch device, and a computer readable storage medium.

In a first aspect of the present disclosure, there is provided a method for controlling an energy storage unit of a dual power supply transfer switch device. The method includes, based on power states of a primary power supply and a backup power supply connected to the dual power supply transfer switch device, causing a power selection circuit of the dual power supply transfer switch device to select, from the primary power supply and the backup power supply, a working power supply for supplying power to the energy storage unit or to a transferring unit of the dual power supply transfer switch device, the transferring unit is capable of transferring between opening and closing, and the energy storage unit is capable of assisting a transferring process of the transferring unit; in response to energy stored by the energy storage unit being consumed during a transferring process of the transferring unit, causing the energy storage unit to be powered by the selected working power supply, so as to perform energy storage on the energy storage unit; and in response to completion of the energy storage process of the energy storage unit, causing the energy storage unit to release the power selection circuit.

In a second aspect of the disclosure, there is provided an apparatus for controlling an energy storage unit of a dual power supply transfer switch device. The apparatus includes at least one processing unit, and at least one memory coupled to the at least one processing unit and storing instructions for execution by the at least one processing unit, which when executed by the at least one processing unit, cause the apparatus to perform the method of the first aspect of the present disclosure.

In a third aspect of the present disclosure, there is provided a dual-power supply transfer switch device including a transferring unit capable of transferring between opening and closing; an energy storage unit capable of assisting a transferring process of the transferring unit; a power selection circuit capable of selecting, from a primary power supply and a backup power supply, a working power supply for supplying power to the transferring unit and the energy storage unit; and the apparatus of the second aspect of the disclosure for controlling the energy storage unit.

**In** a fourth aspect of the present disclosure, there is provided a computer readable storage medium having a computer program stored thereon, wherein the computer program is executable by a processor to implement the method of the first aspect of the present disclosure.

As will be understood from the following description, according to embodiments of the present disclosure, a working power supply can be selected from two power supplies based on an electrical parameter, instead of directly connecting an energy storage unit to a primary circuit, thereby enhancing safety of a device. In addition, embodiments of the present disclosure can control execution of an energy storage process based on execution of a transferring process, preventing energy storage and the transferring process from conflicting. In addition, according to the embodiments of the present disclosure, an energy storage motor of the same specification can be used when two power supplies provide different rated voltages, thereby reducing difficulty in production and management and control, design and manufacturing costs, and difficulty in selecting a type of a motor by a user. In addition, according to the embodiments of the present disclosure, the energy storage unit can be prevented from being subjected to an excessively high voltage, thereby preventing the energy storage motor from being damaged. In addition, according to the embodiments of the present disclosure, a user can be notified in time when an abnormality occurs in the energy storage process, so as to perform a corresponding maintenance operation. Other benefits will be described below in conjunction with corresponding embodiments.

It should be understood that what is described in this Summary is not intended to limit critical features or essential features of embodiments of the disclosure, nor is it intended to limit a scope of the present disclosure. Other features of the present disclosure will become readily understood from the following description.

### BRIEF DESCRIPTION OF THE DRAWINGS

The above and other features, advantages, and aspects of various embodiments of the present disclosure will become more apparent with reference to the following detailed description taken in conjunction with drawings. In the drawings, the same or similar reference signs denote the same or similar elements, wherein:
FIG. 1 illustrates a schematic block diagram of a conventional dual power supply transfer switch device;
FIG. 2 illustrates a schematic block diagram of a dual power supply transfer switch device according to some embodiments of the present disclosure;
FIG. 3 illustrates a flowchart of a process for controlling an energy storage unit of a dual power supply transfer switch device according to some embodiments of the present disclosure;
FIG. 4 illustrates a flowchart of a power selection process according to some embodiments of the disclosure;
FIG. 5 illustrates a flowchart of an energy storage motor control process according to some embodiments of the present disclosure;
FIG. 6 illustrates a schematic structural block diagram of a supply voltage control mechanism of an energy storage unit according to some embodiments of the present disclosure; and
FIG. 7 illustrates a block diagram of a device capable of implementing various embodiments of the present disclosure.

### DETAILED DESCRIPTION

Embodiments of the present disclosure will be described in more detail below with reference to the drawings. Although certain embodiments of the present disclosure are shown in the drawings, it should be understood that the present disclosure may be implemented in various forms and should not be construed as limited to the embodiments set forth herein, but rather, these embodiments are provided for a thorough and complete understanding of the present disclosure. It should be understood that the drawings and embodiments of the present disclosure are only for illustrative purposes and are not intended to limit the scope of the present disclosure.

In the description of the embodiments of the present disclosure, the term "including" and the like should be understood as open-ended including, that is, "including but not limited to". The term "based on" should be read as "based at least in part on. " The term "an embodiment" or "the embodiment" should be read as "at least one embodiment". The term "some embodiments" should be understood as "at least some embodiments ". Other explicit and implicit definitions may also be included below. The terms "first", "second", etc. may refer to different or identical objects. Other explicit and implicit definitions may also be included below.

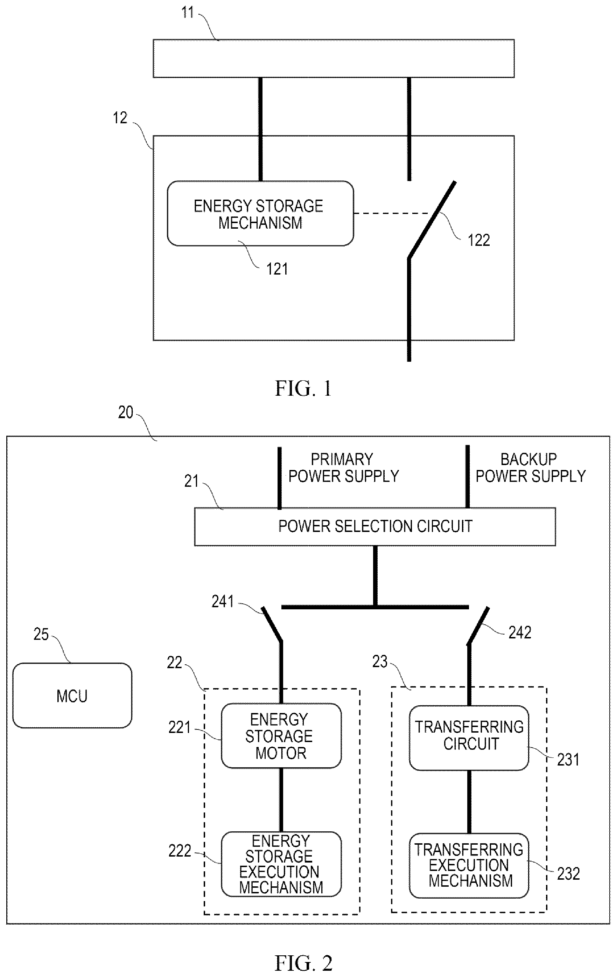

As mentioned briefly above, in a CB level ATS device, whether an energy storage motor in a circuit breaker performs an energy storage process is passively determined by a primary circuit connected to the circuit breaker. FIG. 1 illustrates a portion of a conventional CB level ATS device. As shown in FIG. 1, an energy storage mechanism 121 in a circuit breaker 12 is directly connected to a primary circuit 11. When the primary circuit 11 is powered, an energy storage motor in the energy storage mechanism 121 may store energy, so as to assist opening and closing processes of a transferring mechanism 122. However, since the energy storage mechanism 121 is directly connected to the primary circuit 11, it is unable to regulate and control parameters such as a voltage and a frequency that the energy storage motor bears when storing energy, and there is a risk of damaging the motor when these parameters exceed a nominal range of the motor.

In addition, in a PC level ATS device, an energy storage mechanism may also be adopted to assist the switching of power supplies. For example, the energy storage mechanism and a transferring structure may reuse a same power supply circuit. However, because the energy storage mechanism cannot properly release the power supply circuit to the transferring mechanism, energy storage and transferring processes may conflict, and there is a risk that both the energy storage and transferring processes fail.

A purpose of the present disclosure is to provide an energy storage unit solution for controlling a dual power supply transfer switch device. In this solution, a working power supply is selected from two power supplies based on an electrical parameter, instead of directly connecting an energy storage unit to a primary circuit, so as to improve security of a device. Additionally, in this solution, execution of an energy storage process is controlled based on execution of a transferring process, to prevent energy storage and the transferring process from conflicting. The principle of the present disclosure will be described below in detail in conjunction with FIGS. 2 to 7.

FIG. 2 illustrates a schematic block diagram of a dual power transfer switch device 20 according to some embodiments of the present disclosure. As shown in FIG. 2, the dual power supply transfer switch device 20 described herein generally includes a power selection circuit 21, an energy storage unit 22, a transferring unit 23, and a processing unit 25.

The power selection circuit 21 may be connected to both the power storage unit 22 and the transferring unit 23 through relays 241 and 242, for selecting a power supply for supplying power to the transferring unit 23 and the power storage unit 22 from a primary power supply and a backup power supply under control of the processing unit 25. In an embodiment, the processing unit 25 may be a microcontroller unit (MCU).

The energy storage unit 22 can perform an energy storage process, and stored energy can assist the transferring unit 23 to transfer between opening and closing. The energy storage unit 22 may adopt various known or future available structures, and embodiments of the present disclosure are not limited thereto. As an example, as shown in FIG. 2, the energy storage unit 22 may include an energy storage motor 221 and an energy storage execution mechanism 222. The energy storage motor 221 may be connected to the power selection circuit 21 via the relay 241, and can store energy for the energy storage execution mechanism 222 when being powered on. When the transferring unit 23 needs to perform transferring, especially opening, the energy storage execution mechanism 222 may release the stored energy, thereby assisting the transferring unit 23 to complete a transferring process.

The transferring unit 23 can perform a switching process including opening and closing. In particular, the transferring unit 23 can be switched off from a first switching-on position for switching on the primary power supply or a second switching-on position for switching on the backup power supply to a neutral position and be switched on from the neutral position to the first switching-on position or to the second switching-on position. The primary power supply and the backup power supply may be various types of power supplies. As an example, the primary power supply may be utility power and the backup power supply may be a generator. The transferring unit 23 may adopt various known or future available structures, and embodiments of the present disclosure are not limited thereto. As an example, as shown in FIG. 2, the transferring unit 23 may include a transferring circuit 231 and a transferring execution mechanism 232. The transferring circuit 231 may be connected to the power selection circuit 21 through the relay 242, and may close or open the transferring execution mechanism 232 under control of the processing unit 25. Because a large force needs to be overcome when the transferring unit 23 performs switching, especially opening, the energy storage unit 22 is provided to assist the opening of the transferring unit 23.

By disposing the energy storage unit 22 downstream of the power selection circuit 21, the energy storage unit 22 does not store energy when the transferring unit 23 performs the transferring process. In this way, stress on front-end components of the dual power transfer switch device 20 and impact on the power supply can be reduced, the cost can be saved, and service life and safety of the energy storage motor 221 are prolonged.

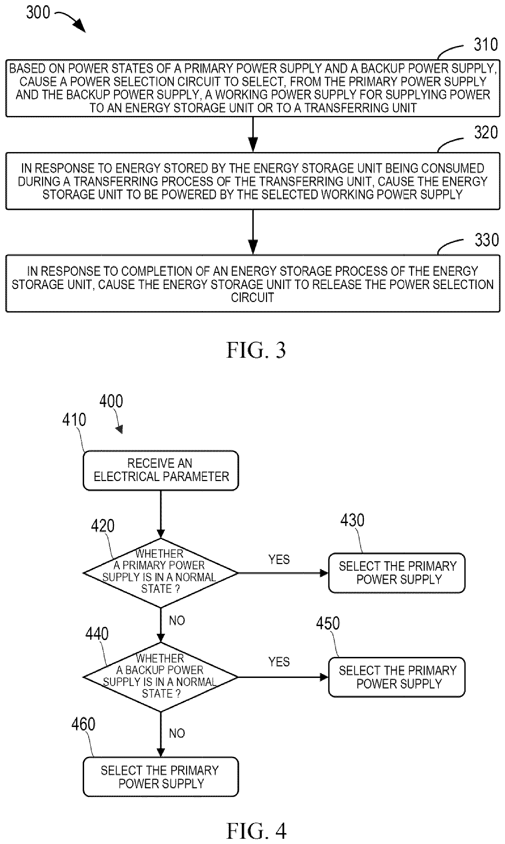

Because the dual power supply transfer switch device 20 adopts a single power selection circuit 21 to supply power to the energy storage unit 22 and the transferring unit 23, it needs to consider how to prevent the energy storage process and the transferring process from conflicting. For this, embodiments of the present disclosure provide a process 300 for controlling an energy storage unit 22 of the dual power supply transfer switch device 20, as shown in FIG. 3. The process 300 may be performed by the processing unit 25 in FIG. 2. The process 300 will be described below in conjunction with the dual power transfer switch device 20 shown in FIG. 2.

As shown in FIG. 3, in block 310, based on the power states of the primary power supply and the backup power supply connected to the dual power supply transfer switch device 20, the processing unit 25 causes the power selection circuit 21 to select, from the primary power supply and the backup power supply, a working power supply for supplying power to the energy storage unit 22 or to the transferring unit 23. The processing unit 25 may determine whether the two power supplies are valid or normal according to electrical parameters of the two power supplies, thereby determining whether the two power supplies can be used. To obtain the electrical parameters, a monitoring unit may be provided in the dual power supply transfer switch device 20 to monitor working states of the power supplies. The monitoring unit may monitor electrical parameters such as voltage and frequency of the primary power supply and the backup power supply.

FIG. 4 illustrates a flowchart of a power selection process 400 according to some embodiments of the disclosure. The power selection process 400 may select a working power supply based on priority of the primary power supply and the backup power supply. For example, the primary power supply may have a higher priority than the backup power supply. In this case, the primary power supply is selected if both the primary power supply and the backup power supply are normal or abnormal. The backup power supply is selected only when the primary power supply is abnormal and the backup power supply is normal.

As shown in FIG. 4, at block 410, a processing unit 25 may receive an electrical parameter obtained by a monitoring unit. At block 420, the processing unit 25 may determine whether the primary power supply is in a normal state based on the electrical parameter of the primary power supply. If it is determined at block 420 that the primary power supply is in the normal state, the process 400 may proceed to block 430. If it is determined at block 420 that the primary power supply is not in the normal state (i.e., is in an anomalous state), the process 400 may proceed to block 440. At block 430, in response to the primary power supply being in the normal state, the processing unit 25 may generate a first selection signal to cause a power selection circuit 21 to select the primary power supply as the working power supply based on the first selection signal. At block 440, in response to the primary power supply being in the abnormal state, the processing unit 25 may determine whether the backup power supply is in the normal state based on the electrical parameter of the backup power supply. If it is determined at block 440 that the backup power supply is in the normal state, the process 400 may proceed to block 450. If it is determined at block 440 that the backup power supply is not in the normal state (i.e., in an abnormal state), the process 400 may proceed to block 460. At block 450, in response to the backup power supply being in the normal state, the processing unit 450 may generate a second selection signal to cause the power selection circuit 21 to select the backup power supply as the working power supply based on the second selection signal. At block 460, in response to the backup power supply being in an abnormal state, the processing unit 450 may generate the first selection signal to cause the power selection circuit 21 to select the primary power supply as the working power supply based on the first selection signal.

In some embodiments, it may be determined whether the primary power supply and the backup power supply are in normal states based on voltages of the primary power supply and the backup power supply. For example, when the voltages of the primary power supply and the backup power supply are within a rated threshold range, the primary power supply and the backup power supply may be regarded as being in the normal states. When the voltages of the primary power supply and the backup power supply are out of the rated threshold range, the primary power supply and the backup power supply may be regarded as being in an abnormal state. Similarly, it is also possible to determine whether the primary power supply and the backup power supply are in the normal states based on frequencies of the primary power supply and the backup power supply, which will not be redundantly described herein.

In some embodiments, when it is determined whether the primary power supply and the backup power supply are in normal states based on the electrical parameters of the primary power supply and the backup power supply, hysteresis may be set for the electrical parameters to overcome disturbances caused by noise.

Returning to FIG. 3, at block 320, in response to the energy stored by the energy storage unit 22 being consumed during the transferring of the transferring unit 23, the processing unit 25 may cause the energy storage unit 22 to occupy the power selection circuit 21 to be powered by the selected working power supply, so as to perform energy storage on the energy storage unit 22. For example, the processing unit 25 may cause the energy storage unit 22 to occupy the power selection circuit 21 by controlling the relay 241 to close and the relay 242 to open.

At block 330, in response to completion of the energy storage process of the energy storage unit 22, the processing unit 25 may cause the energy storage unit 22 to release the power selection circuit 21. For example, the processing unit 25 can cause the energy storage unit 22 to release the power selection circuit 21 by controlling the relay 241 to open.

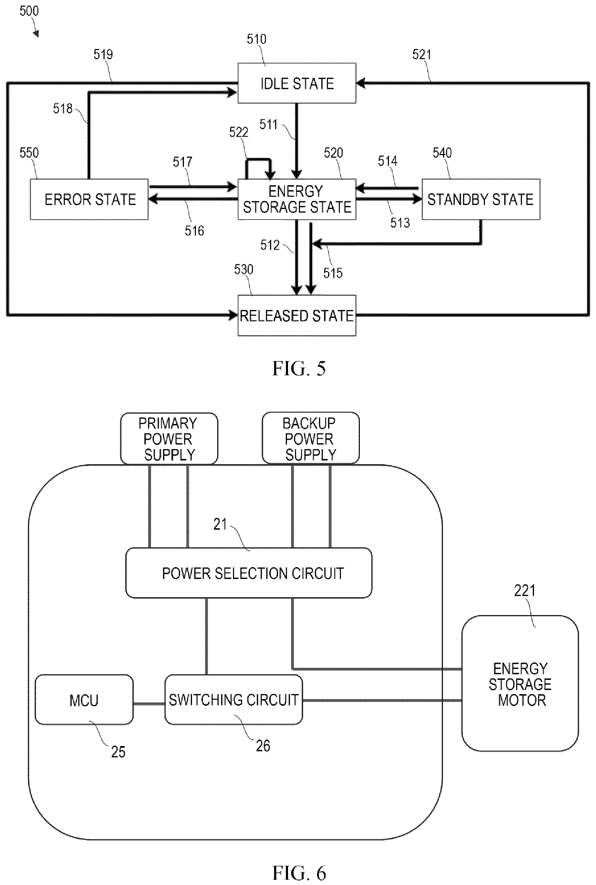

FIG. 5 illustrates a flowchart of an energy storage motor control process 500 according to some embodiments of the present disclosure. In an embodiment, as shown in FIG. 5, an energy storage motor 221 may be switched between an idle state 510, an energy storage state 520, a released state 530, a standby state 540, and an error state 550 under control of the processing unit 25. In embodiments of the present disclosure, the switching process among the above states may also be referred to as a state switching process of the energy storage unit 22. For example, energy storage unit 22 may be referred to as switching between the idle state 510, the energy storage state 520, the released state 530, the standby state 540, and the error state 550. The idle state 510 indicates that the energy storage motor 221 is in an idle state in which no energy storage process is performed. The energy storage state 520 indicates a state in which the energy storage motor 221 occupies the power selection circuit 21 to perform the energy storage process. The released state 530 indicates a state in which the energy storage motor 221 releases the power selection circuit 21 to end the energy storage process. The standby state 540 indicates a state in which the energy storage motor 221 suspends the energy storage process. The error state 550 indicates a state in which the energy storage process has an error or anomaly.

In an embodiment, as shown in FIG. 5, at arrow 511, when energy stored by the energy storage unit 22 is consumed during the transferring of transferring unit 23, the energy storage motor 221 may be switched from the idle state 510 to the energy storage state 520 under control of the processing unit 25. In other words, the processing unit 25 may cause the energy storage unit 22 to occupy the power selection circuit 21 to be powered by the selected working power supply, so as to perform energy storage on the energy storage unit 22.

In an embodiment, as shown in FIG. 5, at arrow 512, when the energy storage process of energy storage unit 22 is complete, the energy storage motor 221 may be switched from the energy storage state 520 to the released state 530 under control of the processing unit 25. In other words, the processing unit 25 may cause the energy storage unit 22 to release the power selection circuit 21 to end the energy storage process.

In an embodiment, as shown in FIG. 5, at arrow 513, in the energy storage process of the energy storage unit 22, if the primary power supply and the backup power supply are both in abnormal states, the energy storage motor 221 may be switched, under control of the processing unit 25, from the energy storage state 520 to the standby state 540. In other words, the processing unit 25 may cause the energy storage unit 22 to enter a motor standby state 540 to suspend the energy storage process. In this way, the energy storage unit 22 can be prevented from being subjected to an excessively high voltage, and damage to the energy storage motor 221 can be prevented.

In an embodiment, as shown in FIG. 5, at arrow 514, when the power storage unit 22 is in the standby state 540, if at least one of the primary power supply and the backup power supply restores to a normal state, the storage motor 221 may be switched from the standby state 540 to the power storage state 520 under the control of the processing unit 25. In this way, the processing unit 25 may cause energy storage unit 22 to restore performance of the energy storage process.

In an embodiment, as shown in FIG. 5, at arrow 515, when power storage unit 22 is in the standby state, if processing unit 25 receives a transferring command for transferring unit 23, then power storage motor 221 may be switched from the standby state 540 to the released state 530 under the control of the processing unit 25. In this way, the processing unit 25 may cause the energy storage unit 22 to release the power selection circuit 21 and cause the transferring unit 23 to occupy the power selection circuit 21 to be powered by the selected working power supply, thereby performing the transferring process of the transferring unit 23.

In an embodiment, as shown in FIG. 5, at arrow 516, if an error occurs in the energy storage process of the energy storage unit 22, the energy storage motor 221 may be switched from the energy storage state 520 to the error state 550 under the control of the processing unit 25. In this case, the processing unit 25 may generate an indication signal to indicate that the energy storage unit 22 is in the error state 550 to notify a user to perform maintenance.

In an embodiment, as shown in FIG. 5, at arrow 517, if the error in the energy storage process of energy storage unit 22 restores, the energy storage motor 221 may be switched from the error state 550 to the energy storage state 520 under the control of the processing unit 25. In this case, the processing unit 25 may cause the energy storage unit 22 to restore the energy storage process.

In an embodiment, as shown in FIG. 5, at arrow 518, if the error in the energy storage process of the energy storage unit 22 restores, the energy storage motor 221 may be switched from the error state 550 to the idle state 510 under the control of the processing unit 25 to restart the energy storage process under appropriate conditions.

In an embodiment, as shown in FIG. 5, at arrow 519, when energy storage unit 22 is in the idle state 510 if the processing unit 25 receives a transferring command for the transferring unit 23, the energy storage motor 221 may be switched from the idle state 510 to the released state 530 under the control of the processing unit 25. In this case, the processing unit 25 may cause the transferring unit 23 to occupy the power selection circuit 21 to be powered by the selected working power supply, thereby performing the transferring process of the transferring unit 23.

In some embodiments, during the energy storage process of energy storage unit 22, if the processing unit 25 receives a transferring command for the transferring unit 23, the energy storage motor 221 may be switched from the energy storage state 520 to the released state 530 under the control of the processing unit 25. In this way, the processing unit 25 may cause the energy storage unit 22 to release the power selection circuit 21 and cause the transferring unit 23 to occupy the power selection circuit 21 to be powered by the selected working power supply, thereby performing the transferring process of the transferring unit 23.

In an embodiment, as shown in FIG. 5, at arrow 521, if the transferring process of the transferring unit 23 is completed, the processing unit 25 may cause the transferring unit 23 to release the power selection circuit 21 and cause the power storage unit 22 to occupy the power selection circuit 21 to be powered by the selected working power supply, so as to restore the energy storage process.

In an embodiment, as shown in FIG. 5, at arrow 522, when the selected working power supply is abnormal and the other power supply is normal, the processing unit 25 may cause the power selection circuit 21 to select the other power supply to supply power to the energy storage process.

According to embodiments of the present disclosure, a working power supply can be selected from two power supplies based on the electrical parameter, instead of directly connecting the energy storage unit to the primary circuit, thereby improving safety of a device. In addition, embodiments of the present disclosure can control the execution of the energy storage process based on the execution of the transferring process, preventing the energy storage and the transferring process from conflicting. In addition, according to the embodiments of the present disclosure, the energy storage unit can be prevented from being subjected to the excessively high voltage, thereby preventing the energy storage motor from being damaged. In addition, according to the embodiments of the present disclosure, the user can be notified in time when an abnormality occurs in the energy storage process, so as to perform a corresponding maintenance operation.

As described above, because the rated power supply voltages of the two power supplies may be different, and the energy storage motors also have different product models, the energy storage motors of different specifications may need to be used due to different voltages of the two power supplies in a use process. This, on the one hand, increases difficulty of production and management and control, resulting in increased design costs and production costs, and on the other hand, also brings users difficulty of selecting types. In addition, because the energy storage motor is directly connected to an alternating current end, an excessively high input voltage may cause damage to the energy storage motor, thereby affecting reliability of a product. In order to solve the described problem, embodiments of the present disclosure provide a power supply voltage control mechanism of the energy storage unit, so as to provide the energy storage motor 221 with a predetermined voltage level in different manners based on a magnitude of a working voltage selected by the power selection circuit 21, as shown in FIG. 6.

In some embodiments, as shown in FIG. 6, the dual power transfer switch device 20 further includes a switching circuit 26. The switching circuit 26 is connected between the power selection circuit 21 and the energy storage unit 22. When a voltage of a working power supply selected by the power selection circuit 21 is lower than a predetermined threshold, the switching circuit 26 may directly supply power to the energy storage unit 22 with the selected working power supply under control of the processing unit 25. When the voltage of the working power supply selected by the power selection circuit 21 is higher than the predetermined threshold, the switching circuit 26 may lower the voltage of the selected working power supply below the predetermined threshold under the control of the processing unit 25 to supply power to the energy storage unit 22. As an example, the switching circuit 26 may perform pulse width modulation (PWM) on the voltage of the selected working supply, to decrease the voltage of the selected working supply below the predetermined threshold.

In an embodiment, the primary power supply and the backup power supply may provide four different nominal supply voltages, e. g., 380V, 400V, 415V, and 440V The energy storage motor 221 may have rated working voltages of two specifications, e. g. 380/415V and 440/480V In embodiments of the present disclosure, when a working voltage selected by the power selection circuit 21 is in a voltage range of 380-440V, the energy storage motor 221 of 380/415V may be uniformly selected. By dynamically adjusting the switching circuit 26, the working voltage selected by the power selection circuit 21 may be adjusted to a voltage level of 380/415V As an example, when a selected working voltage is below a predetermined threshold of 380V, the switching circuit 26 may directly turn on switch devices therein to supply power the energy storage motor 221. When the selected working voltage is greater than 380V, the switching circuit 26 may periodically turn on the switch devices therein, so as to reduce the voltage of the selected working power supply to the predetermined voltage level to supply power to the energy storage motor 221. By dynamically adjusting the input voltage of the energy storage motor 221 to meet a voltage requirement of the energy storage motor 221, the energy storage motor 221 can be protected from being damaged when input high voltages of the primary power supply and the backup power supply are relatively high.

It should be noted that the numbers, values, etc., mentioned above and elsewhere in the present disclosure are exemplary and are not intended to limit the scope of the disclosure in any way. Any other suitable number or value is possible.

According to the embodiments of the present disclosure, the dual power transferring switch device 20 only needs one type of energy storage motor 221, thereby reducing the specification and types of products, facilitating selection by a customer, and improving production efficiency of the dual power transferring switch device 20. In addition, the energy storage motor 221 can adapt to different rated voltages. In addition, the energy storage motor 221 is disposed at a rear end of the power selection circuit 21, thereby improving service life and safety of the energy storage motor 221.

Embodiments of the present disclosure also provide an apparatus for controlling the energy storage unit 22 of a dual power supply transfer switch device 20. The apparatus may be used to perform the process 300, the process 400, and the process 500 described above. The apparatus includes a power supply selection module configured to, based on power states of a primary power supply and a backup power supply connected to the dual power supply transfer switch device 20, cause a power selection circuit 21 of the dual-power transferring switch device 20 to select, from the primary power supply and the backup power supply, a working power supply for supplying power to the energy storage unit 22 or to a transferring unit 23 of the dual-power transferring switch device 20, the transferring unit 23 is capable of transferring between opening and closing, and the energy storage unit 22 is capable of assisting a transferring process of the transferring unit 23; an energy storage starting module configured to, in response to energy stored by the energy storage unit 22 being consumed during the transferring process of the transferring unit 23, cause the energy storage unit 22 to be powered by the selected working power supply, so as to perform energy storage on the energy storage unit 22; and an energy storage release module configured to, in response to completion of an energy storage process of the energy storage unit 22, cause the energy storage unit 22 to release the power selection circuit 21.

In some embodiments, the power supply selection module is further configured to: determine whether the primary power supply is in a normal state based on an electrical parameter of the primary power supply; in response to the primary power supply being in a normal state, generate a first selection signal to cause the power selection circuit 21 to select the primary power supply as the working power supply; in response to the primary power supply being in an abnormal state, determine whether the backup power supply is in a normal state based on an electrical parameter of the backup power supply; in response to the backup power supply being in a normal state, generate a second selection signal to cause the power selection circuit 21 to select the backup power supply as the working power supply; and in response to the backup power supply being in an abnormal state, generating the first selection signal to cause the power selection circuit 21 to select the primary power supply as the working power supply.

In some embodiments, the apparatus further comprises: an energy storage suspend module configured to, during an energy storage process of the energy storage unit 22, in response to that the primary power supply and the backup power supply are both in the abnormal state, cause the energy storage unit 22 to enter a standby state so as to suspend the energy storage process.

In some embodiments, the apparatus further comprises: an energy storage restore module configured to, in response to at least one of the primary power supply and the backup power supply being restored to a normal state, cause the energy storage unit 22 to recover the energy storage process.

In some embodiments, the apparatus further comprises: a transferring starting module, configured to, when the energy storage unit 22 is in the standby state, in response to a transferring command for the transferring unit 23 being received, cause the energy storage unit 22 to release the power selection circuit 21 and cause the transferring unit 23 to be powered by the selected working power supply, so as to execute the transferring process of the transferring unit 23.

In some embodiments, the apparatus further comprises: an abnormality indication module configured to, in response to an error occurring in the energy storage process, generate an indication signal to indicate that the energy storage unit 22 is in an error state.

In some embodiments, the apparatus further comprises: an energy storage restore module configured to, in response to the energy storage unit 22 restoring to normal from an abnormal state, cause the energy storage unit 22 to restore the energy storage process.

In some embodiments, the apparatus further comprises: a transferring starting module, configured to, during an energy storage process of the energy storage unit 22, in response to a transferring command for the transferring unit 23 being received, cause the energy storage unit 22 to release the power selection circuit 21 and cause the transferring unit 23 to be powered by the selected working power supply, so as to execute a transferring process of the transferring unit 23; and an energy storage restore module configured to, in response to completion of the transferring process, cause the transferring unit 23 to release the power selection circuit 21 and cause the energy storage unit 22 to be powered by the selected working power supply, so as to restore the energy storage process.

In some embodiments, the apparatus further comprises a power supply switching module configured to, in response to a voltage of the selected working power supply being lower than a predetermined threshold, directly supply power to the energy storage unit 22 with the selected working power supply; and in response to the voltage of the selected working power supply being higher than the predetermined threshold, reduce the voltage of the selected working power supply to be lower than the predetermined threshold to supply power the energy storage unit 22.

In some embodiments, reducing the voltage of the selected working supply to be lower than the predetermined threshold includes performing pulse width performing the voltage of the selected working power supply.

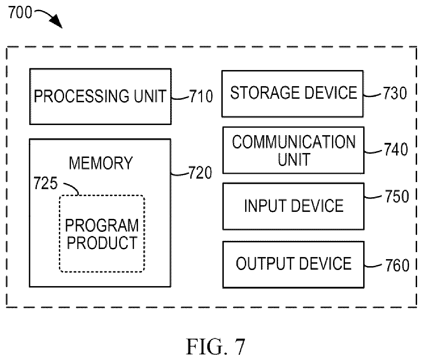

FIG. 7 illustrates a block diagram illustrating an electronic device 700 in which one or more embodiments of the present disclosure may be implemented. It should be understood that the electronic device 700 shown in FIG. 7 is merely exemplary and should not constitute any limitation on the functionality and scope of the embodiments described herein. The electronic device 700 shown in FIG. 7 may be used to implement at least part of the processing unit 25 shown in FIGS. 2 and 6.

As shown in FIG. 7, the electronic device 700 is in a form of a general-purpose electronic device. Components of the electronic device 700 may include, but are not limited to, one or more processors or processing units 710, a memory 720, a storage device 730, one or more communication units 740, one or more input devices 750, and one or more output devices 760. The processing unit 710 may be an actual or virtual processor and can perform various processes according to programs stored in the memory 720. In a multiprocessor system, a plurality of processing units execute computer executable instructions in parallel to improve parallel processing capability of the electronic device 700.

The electronic device 700 typically includes a number of computer storage media. Such media may be any available media that is accessible to the electronic device 700, including, but not limited to, volatile and non-volatile media, removable and non-removable media. The memory 720 may be volatile memory (e.g., registers, cache, random access memory (RAM)), non-volatile memory (e. g., read-only memory (ROM), electrically-erasable programmable read-only memory (EEPROM), flash memory), or some combination thereof. Storage device 730 may be a removable or non-removable medium and may include a machine-readable medium such as a flash drive, a magnetic disk, or any other medium that may be used to store information and/or data (e.g., training data for training) and that may be accessed within electronic device 700.

The electronic device 700 may further comprise additional removable/non-removable, volatile/nonvolatile storage media. Although not shown in FIG. 7, a magnetic disk drive for reading from or writing to a removable, nonvolatile magnetic disk such as a "floppy disk" and an optical disk drive for reading from or writing to a removable, nonvolatile optical disk may be provided. In these cases, each drive may be connected to a bus (not shown) by one or more data media interfaces. The memory 720 may include a computer program product 725 having one or more program modules configured to perform various methods or actions of various embodiments of the present disclosure.

The communication unit 740 causes communication with other electronic devices over a communication medium. In addition, functionality of the components of the electronic device 700 may be implemented in a single computing cluster or in multiple computing machines that are capable of communicating over a communication connection. Thus, the electronic device 700 may operate in a networked environment using logical connections to one or more other servers, network personal computers (PCs), or another network node.

Input device(s) 750 may be one or more input devices such as a mouse, keyboard, trackball, etc. Output device(s) 760 may be one or more output devices such as a display, speakers, printer, etc. The electronic device 700 may also communicate with one or more external devices (not shown), such as storage devices, display devices, etc. , as needed through the communication unit 740, with one or more devices that cause a user to interact with the electronic device 700, or with any device (e. g., network card, modem, etc. ) that causes the electronic device 700 to communicate with one or more other electronic devices. Such communication may be performed via an input/output (I/O) interface (not shown).

According to an exemplary implementation of the present disclosure, an apparatus for controlling an energy storage unit of a dual power supply transfer switch device is provided. The apparatus includes at least one processing unit and at least one memory coupled to the at least one processing unit and storing instructions for execution by the at least one processing unit that, when executed by the at least one processing unit, cause the apparatus to perform the method described above.

According to an exemplary implementation of the present disclosure, a dual power transfer switch device is provided. The dual power transfer switch device includes: a transferring unit capable of transferring between opening and closing; an energy storage unit capable of assisting a transferring process of a transferring unit; a power selection circuit capable of selecting, from a primary power supply and a backup power supply, a working power supply for supplying power to the transferring unit and the energy storage unit; and any one of the above apparatuses for controlling the energy storage unit of the dual power supply transfer switch device.

According to an exemplary implementation of the present disclosure, a computer readable storage medium is provided, having a computer executable instruction stored, wherein the computer executable instruction is executed by a processor to implement the method described above. According to an exemplary implementation of the present disclosure, there is also provided a computer program product, which is tangibly stored on a non-transitory computer readable medium and includes computer executable instructions that are executed by a processor to implement the method described above.

Aspects of the present disclosure are described herein with reference to flowchart illustrations and/or block diagrams of methods, apparatus, devices and computer program products implemented according to the present disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processing unit of a general purpose computer, special purpose computer, or other programmable data processing apparatus to produce a machine, such that the instructions, which execute via the processing unit of a computer or other programmable data processing apparatus, create means for implementing functions/acts specified in the flowchart and/or block diagram block or blocks. These computer-readable program instructions may also be stored in a computer-readable storage medium that can direct a computer, programmable data processing apparatus, and/or other devices to function in a particular manner, such that the computer-readable medium storing the instructions includes an article of manufacture including instructions which implement various aspects of the functions/acts specified in the flowchart and/or block diagram block or blocks.

The computer readable program instructions may be loaded onto a computer, other programmable data processing apparatus, or other devices, causing a series of working steps to be performed on a computer, other programmable data processing apparatus, or other devices, to produce a computer implemented process such that the instructions which execute on the computer, other programmable data processing apparatus, or other devices implement the functions/acts specified in the flowchart and/or block diagram block or blocks.

The flowchart and block diagrams in the drawings illustrate the architecture, functionality, and operation of possible implementations of systems, methods and computer program products according to various implementations of the present disclosure. In this regard, each block in the flowchart or block diagrams may represent a module, segment, or portion of an instruction which comprises one or more executable instructions for implementing the specified logical function(s). In some alternative implementations, the functions noted in the blocks may occur out of the order noted in the drawings. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Having described implementations of the present disclosure above, the foregoing description is exemplary, not exhaustive, and is not limited to implementations disclosed. Many modifications and variations will be apparent to those of ordinary skill in the art without departing from the scope and spirit of the implementations described. Choice of terms used herein is intended to best explain the principles of the implementations, practical application, or improvements to technologies in the marketplace, or to cause others of ordinary skill in the art to understand the implementations disclosed herein.

## Claims

1. A method (300) for controlling an energy storage unit (22) of a dual power supply transfer switch device, comprising:
based on power states of a primary power supply and a backup power supply connected to the dual power supply transfer switch device, causing (310) a power selection circuit (21) of the dual power supply transfer switch device to select, from the primary power supply and the backup power supply, a working power supply for supplying power to the energy storage unit (22) or to a transferring unit (23) of the dual power supply transfer switch device, the transferring unit (23) is capable of transferring between opening and closing, and the energy storage unit (22) is capable of assisting a transferring process of the transferring unit (23);
in response to energy stored by the energy storage unit (22) being consumed during the transferring process of the transferring unit (23), causing (320) the energy storage unit (22) to be powered by the selected working power supply, so as to perform energy storage on the energy storage unit (22); and
in response to completion of an energy storage process of the energy storage unit (22), causing (330) the energy storage unit (22) to release the power selection circuit (21).

2. The method of claim 1, wherein the working power supply is selected by:
determining whether the primary power supply is in a normal state based on an electrical parameter of the primary power supply;
in response to the primary power supply being in a normal state, generating a first selection signal to cause the power selection circuit (21) to select the primary power supply as the working power supply;
in response to the primary power supply being in an abnormal state, determining whether the backup power supply is in a normal state based on an electrical parameter of the backup power supply;
in response to the backup power supply being in a normal state, generating a second selection signal to cause the power selection circuit (21) to select the backup power supply as the working power supply; and
in response to the backup power supply being in an abnormal state, generating the first selection signal to cause the power selection circuit (21) to select the primary power supply as the working power supply.

3. The method of claim 2, further comprising:
during the energy storage process of the energy storage unit (22), in response to that the primary power supply and the backup power supply are both in the abnormal state, causing the energy storage unit (22) to enter a standby state (540) so as to suspend the energy storage process.

4. The method of claim 3, further comprising:
when the energy storage unit (22) is in the standby state (540), in response to at least one of the primary power supply and the backup power supply being restored to the normal state, causing the energy storage unit (22) to restore the energy storage process.

5. The method of claim 3, further comprising:
when the energy storage unit (22) is in the standby state (540), in response to a transferring command for the transferring unit (23) being received, causing the energy storage unit (22) to release the power selection circuit (21) and causing the transferring unit (23) to be powered by the selected working power supply, so as to execute the transferring process of the transferring unit (23).

6. The method of any of claims 1 to 5, further comprising:
in response to an error occurring in the energy storage process, generating an indication signal to indicate that the energy storage unit (22) is in an error state (550).

7. The method of claim 6, further comprising:
in response to the energy storage unit (22) restoring to normal from the abnormal state, causing the energy storage unit (22) to restore the energy storage process.

8. The method of any of claims 1 to 7, further comprising:
during an energy storage process of the energy storage unit (22), in response to a transferring command for the transferring unit (23) being received, causing the energy storage unit (22) to release the power selection circuit (21) and causing the transferring unit (23) to be powered by the selected working power supply, so as to execute the transferring process of the transferring unit (23); and
in response to completion of the transferring process, causing the transferring unit (23) to release the power selection circuit (21) and causing the energy storage unit (22) to be powered by the selected working power supply, so as to restore the energy storage process.

9. The method of any of claims 1 to 8, further comprising:
in response to a voltage of the selected working power supply being lower than a predetermined threshold, causing a switching circuit to directly supply power to the energy storage unit (22) with the selected working power supply; and
in response to the voltage of the selected working power supply being higher than the predetermined threshold, causing the switching circuit to reduce the voltage of the selected working power supply to be lower than the predetermined threshold to supply power the energy storage unit (22).

10. The method of claim 9, wherein reducing the voltage of the selected working power supply to be lower than the predetermined threshold comprises:
performing pulse width modulation on the voltage of the selected working power supply.

11. An apparatus for controlling an energy storage unit (22) of a dual power supply transfer switch device, comprising:
at least one processing unit (710); and
at least one memory (720) coupled to the at least one processing unit (710) and storing instructions for execution by the at least one processing unit (710), which when executed by the at least one processing unit (710), cause the apparatus to perform the method of any of claims 1 to 10.

12. A dual power supply transfer switch device, comprising:
a transferring unit (23) capable of transferring between opening and closing;
an energy storage unit (22) capable of assisting a transferring process of the transferring unit (23);
a power selection circuit (21) capable of selecting, from a primary power supply and a backup power supply, a working power supply for supplying power to the transferring unit (23) and the energy storage unit (22); and
the apparatus of claim 11 for controlling the energy storage unit (22).

13. The dual power supply transfer switch device of claim 12, further comprising a switching circuit (26), wherein the switching circuit (26) is connected between the power selection circuit (21) and the energy storage unit (22), and configured to:
when a voltage of the selected working power supply is lower than a predetermined threshold, directly supply power to the energy storage unit (22) with the selected working power supply; and
when the voltage of the selected working power supply is higher than the predetermined threshold, reduce the voltage of the selected working power supply to be lower than the predetermined threshold to supply power to the energy storage unit (22).

14. A computer readable storage medium, having a computer program stored thereon, wherein the computer program is executable by a processor to implement the method of any of claims 1 to 10.
